# EUROPÄISCHE PATENTSCHRIFT

(11) **EP 2 478 389 B1**
(45) Veröffentlichungstag und Bekanntmachung des Hinweises auf die Patenterteilung: **10.04.2013**
(21) Anmeldenummer: 11733636.2
(22) Anmeldetag: 07.07.2011
(51) Int. Cl.: G01S 15/93

(54) **ULTRASCHALLMESSSYSTEM FÜR PARKHILFEN VON FAHRZEUGEN**
ULTRASONIC MEASUREMENT SYSTEM FOR PARKING ASSISTANCE FOR VEHICLES
SYSTÈME ULTRASONIQUE D'AIDE AU STATIONNEMENT DE VÉHICULES

(30) Priorität: 14.07.2010 EP 10169508
(43) Veröffentlichungstag der Anmeldung: 25.07.2012
(73) Patentinhaber: ELMOS Semiconductor AG, 44227 Dortmund (DE)
(72) Erfinder: SPIEGEL, Egbert, 44227 Dortmund (DE); SCHLAUTMANN, Guido, 44227 Dortmund (DE)
(74) Vertreter: von Kreisler Selting Werner
(86) Internationale Anmeldenummer: PCT/EP2011/061496
(87) Internationale Veröffentlichungsnummer: WO 2012/007342

(56) Entgegenhaltungen:
- DE-A1-102005 023 696
- DE-A1-102008 041 894
- US-A- 4 451 909

## Beschreibung

Die Erfindung betrifft ein Ultraschallmesssystem für Parkhilfen von Fahrzeugen.

Abstandsmesssysteme für Fahrzeuge, die den Abstand eines Fahrzeuges zu potentiellen in der unmittelbaren Umgebung des Fahrzeugs befindlichen Objekten o.dgl. Hindernisse während eines Rangiervorgangs ermitteln, erfreuen sich zunehmender Beliebtheit. Derartige Abstandsmesssysteme arbeiten zumeist auf Ultraschallbasis und weisen im Regelfall einen Ultraschallmesswandler auf, der wahlweise als Ultraschallsender oder als Ultraschallempfänger betreibbar ist. Dabei wechseln sich während des Betriebs des Ultraschallmesswandlers Sende- und Empfangsintervalle ab. Mit Beendigung eines Sendeintervalls sollte der Ultraschallmesswandler direkt als Empfänger betrieben werden können, um nämlich das am Ultraschallmesswandler anliegende Messsignal unmittelbar verarbeiten zu können. Nach dem Abschalten des Ultraschallsendesignals, bei dem es sich um einen sogenannten Sendeburst handelt, schwingt das Schwingelement des Ultraschallmesswandlers allerdings noch für eine gewisse Zeit nach (Ausschwingintervall), und zwar auf einer anderen, in der Regel geringfügig höheren Frequenz als der Sendefrequenz. Diese Ausschwingfrequenz fällt je nach Typ des Ultraschallmesswandlers und den Fertigungstoleranzen nicht mehr in das für den optimalen Empfang vorgesehene Bandpassfilter der Sendeansteuer- und Empfangssignalverarbeitungseinheit des Ultraschallmesssystems. Als Resultat entstehen starke Einbrüche im demodulierten Signal (Hüllkurve) am Messausgang des Ultraschallmesswandlers, die von der Sendeansteuer- und Empfangssignalverarbeitungseinheit als nahe Echos erkannt werden. Dies ist unerwünscht und führt zu nicht korrekten Abstandsmessungen bzw. der Signalisierung von Hindernissen in unmittelbarer Nähe des Fahrzeuges, die tatsächlich nicht vorhanden sind.

Eine Abhilfemaßnahme für die o.g. Unzulänglichkeit wäre das Stummschalten des Ultraschallmesswandlers bzw. die Nichtberücksichtigung des am Messausgang des Ultraschallmesswandlers anliegenden Signals für einen bestimmten Zeitraum ab Beendigung des durch die Anregung des Schwingelements des Ultraschallmesswandlers bestimmten Sendeintervalls. Nachteilig bei dieser Maßnahme ist allerdings, dass dann eine Funktionskontrolle des Ultraschallmesswandlers für diesen Zeitraum nicht mehr möglich ist. Alternativ könnte man auch ein Bandpassfilter mit einer größeren Bandbreite einsetzen, was allerdings mit einem verschlechterten Signal-Rausch-Abstand und einer erhöhten Störempfindlichkeit erkauft wird.

Aus US-A-4 451 909 ist ein Ultraschallmessssystem nach dem Oberbegriff des Anspruchs 1 bekannt. Weitere Ultraschallmesssysteme sind aus DE-A-10 2008 041 894 und DE-A-10 2005 023 696 bekannt.

Aufgabe der Erfindung ist es, ein Ultraschallmesssystem für Parkhilfen von Fahrzeugen zu schaffen, bei dem die Gefahr der fehlerhaften Interpretation der am Messausgang des Ultraschallmesswandlers anliegenden Signale reduziert ist.

Zur Lösung dieser Aufgabe wird mit der Erfindung ein Ultraschallmesssystem für Parkhilfen von Fahrzeugen vorgeschlagen, das versehen ist mit
- einem ein Schwingelement aufweisenden Ultraschallmesswandler, der wahlweise sowohl als Ultraschallsensor als auch als Ultraschallempfänger betreibbar ist, und
- einer mit dem Ultraschallmesswandler verbundenen Sendeansteuer- und Empfangssignalverarbeitungseinheit zur Anregung des Schwingelements des Ultraschallmesswandlers zum Aussenden von Ultraschallwellen für den Betrieb als Ultraschallsender während eines Sendeintervalls und zur anschließenden Deaktivierung des Schwingelements des Ultraschallmesswandlers zum Empfangen von Ultraschallwellen für dessen Betrieb als Ultraschallempfänger während eines Empfangsintervalls und zur Verarbeitung von an einem Messausgang des Ultraschallmesswandlers anliegenden Signalen, wobei das Schwingelement nach Beendigung seiner Anregung während eines Ausschwingintervalls ausschwingt,
- wobei die Sendeansteuer- und Empfangssignalverarbeitungseinheit ein Bandpassfilter zur Filterung der während des Ausschwingintervalls und des Empfangsintervalls am Messausgang des Ultraschallmesswandlers anliegenden Signale aufweist.

Bei diesen Ultraschallmesssystemen ist erfindungsgemäß vorgesehen,
- dass die Bandbreite des Bandpassfilters (30) wahlweise auf einen größeren ersten Bandbreitenwert oder einen kleineren zweiten Bandbreitenwert umschaltbar ist und während einer spätestens mit dem Ausschwingintervalls beginnenden ersten Phase auf den größeren ersten Bandbreitenwert eingestellt und nach Ablauf der ersten Phase bis zumindest zum Ende des sich an das Ausschwingintervall anschließenden Empfangsintervalls auf den kleineren zweiten Bandbreitenwert eingestellt ist,
- dass die Sendeansteuer- und Empfangssignalverarbeitungseinheit einen Signalpegelkomparator zum Vergleich des Signalpegels des am Messausgang des Ultraschallmesswandlers anliegenden Signals mit einem Schwellwert aufweist und die erste Phase, in der die Brandbreite des Bandpassfilters auf den größeren ersten Bandbreitenwert eingestellt ist, abgeschlossen ist, wenn der Signalpegel des während des Ausschwingintervalls am Messausgang des Ultraschallmesswandlers anliegenden Signals kleiner als der Schwellwert ist,
- dass dem Signalpegelkomparator ein Hüllkurvensignal zuführbar ist, das aus dem am Messausgang des Ultraschallmesswandlers anliegenden Signals erzeugbar ist, und
- dass dem Signalpegelkomparator ein Tiefpassfilter mit umschaltbarer Eckfrequenz vorgeschaltet ist, die zumindest während der ersten Phase, in der die Bandbreite des Bandbreitenfilters auf den größeren ersten Bandbreitenwert eingestellt ist, auf einen niedrigeren ersten Eckfrequenzwert und nach Ablauf der ersten Phase bis zumindest zum Ende des sich an das Ausschwingintervall anschließenden Empfangsintervalls auf einen höheren zweiten Eckfrequenzwert eingestellt ist.

Mit der Erfindung wird also ein spezielles Filter für die Verarbeitung des Signals am Ausgang des Ultraschallmesswandlers während eines Ausschwingintervalls und des sich anschließenden Empfangsintervalls vorgeschlagen. Die Besonderheit dieses Filters besteht darin, dass es als Bandpassfilter mit wahlweise veränderbarer Bandbreite ausgelegt ist. Während zumindest einer ersten Phase des Ausschwingintervalls ab dessen Beginn ist die Bandbreite des Bandpassfilters auf einen größeren ersten Wert eingestellt. Alternativ ist es möglich, dass Bandpassfilter auch bereits während des dem Ausschwingintervall vorhergehenden Sendeintervalls auf den größeren ersten Wert einzustellen. Nach Ablauf der ersten Phase des Ausschwingintervalls bis zumindest zum Ende des sich anschließenden Empfangsintervalls wird die Bandbreite des Bandpassfilters umgeschaltet, und zwar auf einen kleineren zweiten Wert.

Durch die erfindungsgemäß vorgesehene Bandbreitenumstellung des Bandpassfilters wird erreicht, dass die Signaleinbrüche im demodulierten Empfangssignal am Messausgang des Ultraschallmesswandlers nicht mehr in Erscheinung treten. Da das Bandpassfilter mit größerer erster Bandbreite bei der Auswertung des Signals am Messausgang des Ultraschallmesswandlers zur Detektion von Echosignalen nachteilig wäre, wird das Bandpasssignal ab einem gewissen Zeitpunkt des Ausschwingintervalls erfindungsgemäß auf eine kleinere zweite Bandbreite umgeschaltet.

Die Länge der ersten Phase eines Ausschwingintervalls kann beispielsweise zeitgesteuert erfolgen und ist somit durch eine vorgebbare Zeitspanne definiert. Nach Ablauf dieser vorgebbaren Zeitspanne ist die erste Phase eines Einschwingintervalls beendet und es erfolgt die Bandbreitenumstellung des Bandpassfilters vom größeren ersten Wert auf den kleineren zweiten Wert. Dieser Umschaltungszeitpunkt ist jedoch erfindungsgemäß durch die Amplitude bzw. den Pegel des Empfangssignals am Ausgang des Ultraschallmesswandlers bestimmt. Hierzu weist die Sendeansteuer- und Empfangssignalverarbeitungseinheit des erfindungsgemäßen Ultraschallmesssystems einen Signalpegelkomparator auf, der den Signalpegel des am Messausgang des Ultraschallmesswandlers anliegenden Signals mit einem Schwellwert vergleicht. Die erste Phase ist abgeschlossen, wenn der Signalpegel des während eines Ausschwingintervalls am Messausgang des Ultraschallmesswandlers anliegenden Signals kleiner als der Schwellwert ist.

Nach der Erfindung erfolgt der Signalpegelvergleich anhand des demodulierten Messsignals des Ultraschallmesswandlers. Hierzu wird das Signal am Messausgang des Ultraschallmesswandlers demoduliert bzw. gleichgerichtet und anschließend mit Hilfe eines Tiefpassfilters gefiltert, wobei das Tiefpassfilter zweckmäßigerweise eine umschaltbare Eckfrequenz aufweist. Während der ersten Phase eines Ausschwingintervalls, in der die Bandbreite des Bandpassfilters den größeren ersten Wert aufweist, weist das Tiefpassfilter eine niedrigere erste Eckfrequenz auf. Nach Ablauf der ersten Phase werden dann sowohl das Bandpassfilter auf die kleinere zweite Bandbreite als auch das Tiefpassfilter auf eine höhere zweite Eckfrequenz eingestellt. Hierdurch werden auf Rauschsignalanteile zurückzuführende Offset-Anteile im Signal am Messausgang des Ultraschallmesswandlers während eines Empfangsintervalls reduziert.

Durch die erfindungsgemäße Umschaltung der Bandbreite des Bandpassfilters von der größeren Bandbreite auf die kleine Bandbreite bei gleichzeitiger Umschaltung der Eckfrequenz des Tiefpassfilters von der kleineren Eckfrequenz auf die größere Eckfrequenz wird das Ausgangssignals des Ultraschallwandlers im Wesentlichen ungestört übertragen, während ein infolge des Ausschwingvorgangs gegebenes Rauschen und/oder eine ggf. noch vorhandene Restwelligkeit gedämpft. Somit ist die Auswertung des Ausgangssignals des Ultraschallwandlers, was die Detektion von Echos betrifft, zuverlässiger möglich.

Die Erfindung wird nachfolgend anhand eines Ausführungsbeispiels und unter Bezugnahme auf die Zeichnung näher erläutert. Im Einzelnen zeigen dabei:
- Fig. 1: schematisch und als Blockschaltbild den Aufbau eines Ultraschallmesssystems mit Ultraschallmesswandler und mit diesem verbundener Sendeansteuer- und Empfangssignalverarbeitungseinheit sowie einer Einheit zur Entfernungsbestimmung,
- Fig. 2: ein Beispiel für den Signalverlauf am (Mess-)Ausgang des Ultraschallmesswandlers während eines Sendeintervalls, eines sich anschließenden Ausschwingintervalls und eines sich an dieses anschließenden Empfangsintervalls,
- Fig. 3: eine Darstellung der schaltungstechnischen Komponenten des Ultraschallmesswandlers,
- Fig. 4: eine Messkurve zur Darstellung der sich verändernden Frequenz des Schwingelements während der aufeinanderfolgenden Sende-, Ausschwing- und Empfangsintervalle,
- Fig. 5: den gemessenen Signalverlauf am (Mess-)Ausgang des Ultraschallmesswandlers bei Einsatz des umschaltbaren Bandpassfilters und
- Fig. 6: ein Vergleich der Hüllkurven des Signals am Ausgang des Ultraschallmesswandlers mit und ohne Umschaltung der Bandbreite des Bandpassfilters und zur Motivation des bezüglich seiner Eckfrequenz umschaltbaren Tiefpassfilters.

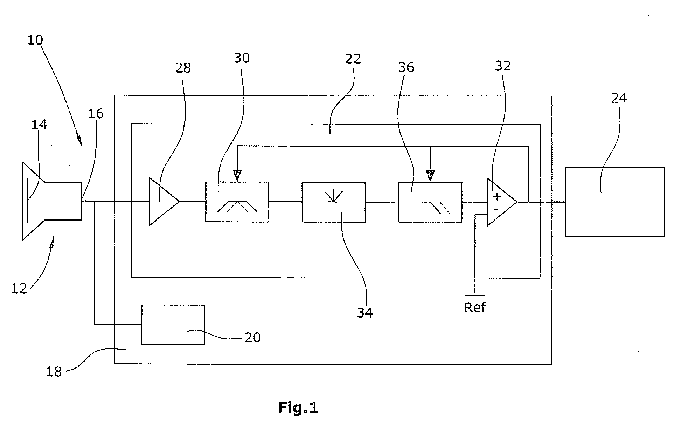

Fig. 1 zeigt die im Rahmen der Erfindung wesentlichen Komponenten eines Ultraschallmesssystems 10 gemäß einem Ausführungsbeispiel der Erfindung. Das Ultraschallmesssystem 10 weist einen Ultraschallmesswandler (Transducer) 12 auf, der ein bei 14 angedeutetes Schwingelement aufweist. Der (Mess-)Ausgang 16 des Ultraschalimesswandlers 12 ist mit einer Sendeansteuer- und Empfangssignalverarbeitungseinheit 18 verbunden. In dieser Einheit 18 erfolgt die aktive Ansteuerung des Ultraschalimesswandlers 12 und damit des Schwingelements 14 zur Aussendung bei Ultraschallwellen. Hierzu weist die Einheit 18 eine Ansteuerschaltung 20 auf, die während eines Sendeintervalls über den Ausgang 16 des Ultraschallmesswandlers 12 diesem Energie zum Anregen des Schwingelements 14 zuführt.

Das mit Beendigung eines Sendeintervalls am Ausgang 16 des Ultraschallmesswandlers 12 anliegende Signal (Empfangssignal) wird innerhalb der Einheit 18 durch eine Empfangssignalverarbeitungsschaltung 22 verarbeitet. Danach gelangt das verarbeitete Signal zu einer weiteren Auswerteeinheit 24, in der anhand der detektierten Echos im Empfangssignal eine Entfernung der die Echos erzeugenden Hindernisse, an denen die Ultraschallwellen reflektiert worden sind, ermittelt wird.

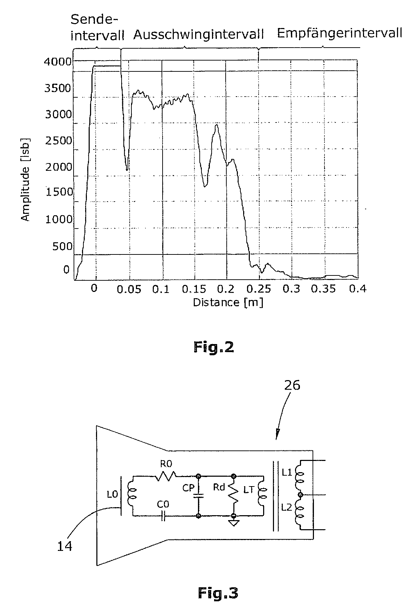

Die Problematik, mit der sich die Erfindung beschäftigt, resultiert daraus, dass der Ultraschallmesswandler 12 zwei gekoppelte Schwingkreise aufweist, und zwar einen Transformator 26 und den das Schwingelement 14 umfassenden Schwingkreis 27. Dieser Sachverhalt ist in Fig. 3 gezeigt. Bestandteil des einen Schwingkreises sind die Sekundärspule LT des Transformators 26 und die Kapazität CP, während zum zweiten Schwingkreis die mit dem Schwingelement 14 gekoppelte Induktivität L0 und die Kapazität C0 gehören. Selbst bei mathematisch exakter Abstimmung der Einzelkreise hat das Gesamtsystem, also der Ultraschallmesswandler 12, zwei unterschiedliche Eigenfrequenzen.

Ein Beispiel für den Signalverlauf am Ausgang 16 des Ultraschallmesswandlers 12 während eines Sendeintervalls, eines Ausschwingintervalls und eines Empfangsintervalls ist in Fig. 2 gezeigt. Während des Sendeintervalls wird dem Ausgang 16 des Ultraschallmesswandlers 12 von der Ansteuerschaltung 20 ein Signal zugeführt, das einen Sendeburst erzeugt, der das Schwingelement 14 anregt, so dass dieses zur Erzeugung von Ultraschallwellen schwingt. Nach Deaktivierung dieser Ansteuerung am Ende der Sendephase schließt sich ein Ausschwingintervall an, innerhalb dessen das Schwingelement ausschwingt. Nach dem Ausschwingintervall schließt sich der Empfangsinterall an, innerhalb dessen das Schwingelement 14 reflektierte (oder auch andere) Ultraschallsignale empfängt.

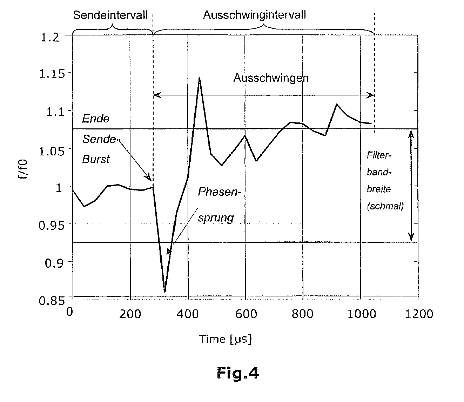

Der Ultraschallmesswandler sendet die Ultraschallwellen beispielsweise mit einer Frequenz von 50 kHz. Auf Grund des Aufbaus des Ultraschallmesswandlers 12 in Form zweier gekoppelter Schwingkreise verändert sich dessen Eigenfrequenz in dem Ausschwingintervall. Versuche haben gezeigt, dass die Ausschwingfrequenz höher ist als die Sendefrequenz. Dieses Phänomen ist in Fig. 4 gezeigt.

Damit die Auswertung des Empfangssignals am Ultraschallmesswandler 12 nicht durch nicht auf die Reflektion von zuvor ausgesendeten Ultraschallwellen zurückzuführende Echos gestört wird, wird das Messsignal nach einer Verstärkung in einem Verstärker 28 der Empfangssignalverarbeitungsschaltung 22 einer möglichst schmalbandigen Bandpassfilterung mittels eines Bandpassfilters 30 gefiltert. Diese Bandbreite, die beispielsweise ± 2 kHz beträgt, ist für einen optimierten Rauschabstand während des Empfangs gewählt. Eine Vergrößerung dieser Bandbreite würde das Problem, dass nämlich, wie in Fig. 2 gezeigt, während des Ausschwingintervalls im Signal am Ausgang 16 des Ultraschallmesswandlers Einbrüche zu verzeichnen sind, grundsätzlich lösen, hätte aber einen deutlich schlechteren Rauschabstand zur Folge.

Daher wird erfindungsgemäß die Bandbreite des Bandpassfilters 30 zumindest während einer ersten Phase des Ausschwingintervalls auf einen größeren Wert, beispielsweise ± 8 kHz eingestellt. Die Zeitdauer dieser ersten Phase des Ausschwingintervalls kann vorgegeben sein. Vorteilhaft ist es aber, die Dauer dieser ersten Phase in Abhängigkeit von dem Signalpegel der Hüllkurve des Signals am Ausgang 16 des Ultraschallmesswandlers 12 zu wählen. Dazu bedarf es eines Signalpegelkomparators 32, der das Empfangssignal mit einem Referenzpegel vergleicht. Das Hüllkurvensignal des Ausgangssignals des Ultraschallmesswandlers 12 wird durch Demodulation erzeugt, indem beispielsweise das Signal durch einen Gleichrichter 34 gleichgerichtet wird. Ist nun der Pegel des Hüllkurvensignals um beispielsweise 50 % gefallen, so kann von der größeren Bandbreite des Bandpassfilters, die im Übrigen auch während des Sendeintervalls eingestellt sein kann, auf die kleinere Bandbreite umgeschaltet werden. Bei größerer Bandbreite ist der Rauschsignalanteil im Ausgangssignal des Ultraschallmesswandlers größer als bei kleiner Bandbreite. Damit entsteht durch die Demodulation und eine für die weitere Verarbeitung des Hüllkurvensignals zweckmäßige Filterung in einem Tiefpassfilter 36 unerwünschterweise im Signal ein Offset-Gleichanteil, der bei "schmaler" Bandbreite des Bandpassfilters 30 deutlich reduziert ist. Das Tiefpassfilter 36 weist eine umschaltbare Eckfrequenz auf, die bei großer Bandbreite des Bandpassfilters 30 bei beispielsweise 4 kHz liegen kann und auf 16 kHz erhöht wird, wenn das Bandpassfilter auf die kleinere Bandbreite umgeschaltet wird. In Abhängigkeit von dem Ergebnis des Signalpegelkomparators 32 wird also sowohl die Bandbreite des Bandpassfilters 30 als auch die Eckfrequenz des Tiefpassfilters 36 umgeschaltet.

Wie oben bereits beschrieben, weist das Signal am Ausgang 16 des Ultraschallmesswandlers 12 während des Ausschwingintervalls Einbrüche auf, so dass während des Ausschwingintervalls das Ausgangssignal des Ultraschallmesswandlers 12 insofern fehlinterpretiert werden könnte, als der Empfang einer reflektierten Ultraschallwelle als auf ein nahes Hindernis zurückzuführendes Echo angenommen werden könnte. Dieses Phänomen ist in Fig. 2 gezeigt, wobei auf der x-Achse der Fig. 2 die Zeit in Entfernung transformiert worden ist. Um jedoch während des gesamten Ausschwingintervalls sowohl Funktions- als auch Plausibilitätsüberprüfungen durchführen zu können, sollte das Signal am Ausgang 16 des Ultraschallmesswandlers 12 nicht ausgeblendet bzw. unterdrückt werden. Daher sind nach der Erfindung die zuvor beschriebene Bandbreitenumschaltung des Bandpassfilters und, sofern der Umschaltzeitpunkt pegelabhängig ist, die Umschaltung der Eckfrequenz des Tiefpassfilters vorgesehen.

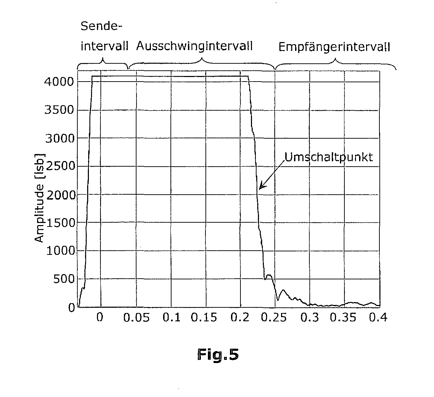

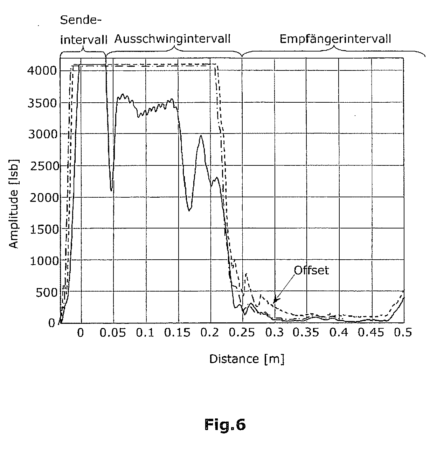

Das signaltechnische Ergebnis dieser erfindungsgemäß vorgesehenen Umschaltung ist in den Fign. 5 und 6 zu erkennen. Anhand von Fig. 5 ist zu erkennen, dass sich nun für die Dauer der ersten Phase des Ausschwingintervalls keinerlei Einbrüche im Ausgangssignal des Ultraschallmesswandlers 12 zeigen. Zum Umschaltzeitpunkt wird dann während des Ausschwingintervalls auf die schmalere Bandbreite des Bandpassfilters 30 sowie die höhere Eckfrequenz des Tiefpassfilters 36 umgeschaltet.

Fig. 6 zeigt die drei Messkurven im Vergleich. Die als durchgezogene Linie dargestellte Messkurve stellt die Situation gemäß Fig. 2 dar, wonach weder eine Bandbreitenumschaltung im Bandpassfilter 30 noch eine Eckfrequenzumschaltung im Tiefpassfilter 36 erfolgt. Die gestrichelte Linie repräsentiert den Signalverlauf mit der zuvor beschriebenen Bandbreitenumschaltung im Bandpassfilter 30 und ohne Eckfrequenzumschaltung des Tiefpassfilters 36. Zu erkennen ist ein erhöhter Offset-Signalanteil zum Ende des Ausschwingintervalls und während des Empfangsintervalls. Schließlich zeigt die strichpunktierte Linie den Signalverlauf unter Verwendung der Bandbreitenumschaltung im Bandpassfilter 30 und der Eckfrequenzumschaltung im Tiefpassfilter 36. Durch die Umschaltung einerseits der Bandbreite des Bandpassfilters 30 von "breit" auf "schmal" und andererseits der Eckfrequenz des Tiefpassfilters 36 kann der Offset-Signalanteil während des Empfangsintervalls deutlich reduziert werden, was wiederum von Vorteil ist, wenn es um die Einstellung der Echoschwelle geht, mit der sich empfangene, zuvor ausgesendete und an einem Hindernis reflektierte Ultraschallwellen geht.

## Patentansprüche

1. Ultraschallmesssystem für Parkhilfen von Fahrzeugen, mit
- einem ein Schwingelement (14) aufweisenden Ultraschallmesswandler (12), der wahlweise sowohl als Ultraschallsensor als auch als Ultraschallempfänger betreibbar ist, und
- einer mit dem Ultraschallmesswandler (12) verbundenen Sendeansteuer- und Empfangssignalverarbeitungseinheit (18) zur Anregung des Schwingelements (14) des Ultraschailmesswandlers (12) zum Aussenden von Ultraschallwellen für den Betrieb als Ultraschallsender während eines Sendeintervalls und zur anschließenden Deaktivierung des Schwingelements (14) des Uftraschallmesswandlers (12) zum Empfangen von Ultraschallwellen für dessen Betrieb als Ultraschallempfänger während eines Empfangsintervalls und zur Verarbeitung von an einem Messausgang (16) des Ultraschallmesswandlers (12) anliegenden Signalen, wobei das Schwingelement (14) nach Beendigung seiner Anregung während eines Ausschwingintervalls ausschwingt,
- wobei die Sendeansteuer- und Empfangssignalverarbeitungseinheit (18) ein Bandpassfilter (30) zur Filterung der während des Ausschwingintervalls und des Empfangsintervalls am Messausgang (16) des Ultraschallmesswandlers (12) anliegenden Signale aufweist,
**dadurch gekennzeichnet,**
- **dass** die Bandbreite des Bandpassfilters (30) wahlweise auf einen größeren ersten Bandbreitenwert oder einen kleineren zweiten Bandbreitenwert umschaltbar ist und während einer spätestens mit dem Ausschwingintervalls beginnenden ersten Phase auf den größeren ersten Bandbreitenwert eingestellt und nach Ablauf der ersten Phase bis zumindest zum Ende des sich an das Ausschwingintervall anschließenden Empfangsintervalls auf den kleineren zweiten Bandbreitenwert eingestellt ist,
- **dass** die Sendeansteuer- und Empfangssignalverarbeitungseinheit (18) einen Signalpegelkomparator (32) zum Vergleich des Signalpegels des am Messausgang (16) des Ultraschallmesswandlers (12) anliegenden Signals mit einem Schwellwert aufweist und die erste Phase, in der die Brandbreite des Bandpassfilters (30) auf den größeren ersten Bandbreitenwert eingestellt ist, abgeschlossen ist, wenn der Signalpegel des während des Ausschwingintervalls am Messausgang (16) des Ultraschallmesswandlers (12) anliegenden Signals kleiner als der Schwellwert ist,
- **dass** dem Signalpegelkomparator (32) ein Hüllkurvensignal zuführbar ist, das aus dem am Messausgang (16) des Ultraschallmesswandlers (12) anliegenden Signals erzeugbar ist, und
- **dass** dem Signalpegelkomparator (32) ein Tiefpassfilter (36) mit umschaltbarer Eckfrequenz vorgeschaltet ist, die zumindest während der ersten Phase, in der die Bandbreite des Bandbreitenfilters (30) auf den größeren ersten Bandbreitenwert eingestellt ist, auf einen niedrigeren ersten Eckfrequenzwert und nach Ablauf der ersten Phase bis zumindest zum Ende des sich an das Ausschwingintervall anschließenden Empfangsintervalls auf einen höheren zweiten Eckfrequenzwert eingestellt ist.

## Claims

1. An ultrasonic measurement system for automobile parking assistance systems, comprising
- an ultrasonic measuring transducer (12) comprising an oscillator element (14), said ultrasonic measuring transducer being selectively operable both as an ultrasonic transmitter and as an ultrasonic receiver, and
- a transmission control and receiving signal processing unit (18) connected to the ultrasonic measuring transducer (12) so as to excite the oscillator element (14) of the ultrasonic measuring transducer (12) for transmitting ultrasonic waves for operation as an ultrasonic transmitter during a transmission interval, and to then deactivate the oscillator element (14) of the ultrasonic measuring transducer (12) for receiving ultrasonic waves for operation of said transducer as an ultrasonic receiver during a reception interval and for processing signals applied to a measurement output (16) of the ultrasonic measuring transducer (12), wherein the oscillation of said oscillator element (14) after termination of its excitation is fading out during a oscillation-settling interval,
- the transmission control and receiving signal processing unit (18) comprises a bandpass filter (30) for filtration of said signals applied to the measurement output (16) of the ultrasonic measuring transducer (12) during said oscillation-settling interval and said reception interval,
**characterized in**
- **that** the bandwidth of the bandpass filter (30) is selectively switchable to a larger first bandwidth value or a smaller second bandwidth value and, during a first phase starting at the latest with said oscillation-settling interval, is set to said larger first bandwidth value, and, after lapse of the first phase at least until the end of said reception interval following said oscillation-settling interval, is set to said smaller second bandwidth value,
- **that** the transmission control and receiving signal processing unit (18) comprises a signal level comparator (32) for comparing the signal level of the signal applied to the measurement output (16) of the ultrasonic measuring transducer (12) against a threshold value, and said first phase during which the bandwidth of the bandpass filter (30) is set to said larger first bandwidth value, is completed when the signal level of said signal applied to the measurement output (16) of the ultrasonic measuring transducer (12) during the oscillation-settling interval is smaller than the threshold value,
- **that** the signal level comparator (32) is adapted to have an envelope signal supplied to it which can be generated from said signal applied to the measurement output (16) of the ultrasonic measuring transducer (12), and
- **that** signal level comparator (32) is connected at its upstream side to a lowpass filter (36) with switchable cutoff frequency which at least in said first phase during which the bandwidth of the bandpass filter (30) is set to said larger first bandwidth value, is set to a lower first cutoff frequency value and, after lapse of said first phase at least until the end of said reception interval following said oscillation-settling interval, is set to a higher second cutoff frequency value.

## Revendications

1. Système de mesure par ultrasons pour aide au stationnement de véhicules, comprenant
- un transducteur d'ultrasons (12) comportant un élément oscillant (14) qui peut fonctionner aussi bien en émetteur d'ultrasons qu'en récepteur d'ultrasons, et
- une unité de commande d'émission et de traitement des signaux de réception (18) connectée au transducteur d'ultrasons et destinée à exciter l'élément oscillant (14) du transducteur d'ultrasons (12), afin d'émettre des ondes ultrasonores pour son fonctionnement en émetteur d'ultrasons pendant un intervalle d'émission, et à désactiver ensuite l'élément oscillant (14) du transducteur d'ultrasons (12) afin de recevoir des ondes ultrasonores pour son fonctionnement en récepteur d'ultrasons pendant un intervalle de réception, et à traiter des signaux apparaissant à une sortie de mesure (16) du transducteur d'ultrasons (12), l'élément oscillant (14) s'amortissant pendant un intervalle d'amortissement après l'interruption de son excitation,
- l'unité de commande d'émission et de traitement du signal de réception (18) présentant un filtre passe-bande (30) destiné à filtrer les signaux apparaissant à la sortie de mesure (16) du transducteur d'ultrasons (12) pendant l'intervalle d'amortissement et l'intervalle de réception,
**caractérisé**
- **en ce que** la largeur de bande du filtre passe-bande (30) peut être basculée sélectivement sur une première valeur de largeur de bande, plus grande, ou sur une deuxième valeur de largeur de bande, plus petite, et étant réglée sur la première valeur de largeur de bande, plus grande, pendant une première phase qui commence au plus tard avec l'intervalle d'amortissement, et sur la deuxième valeur de largeur de bande, plus petite, après l'expiration de la première phase au moins jusqu'à la fin de l'intervalle de réception qui fait suite à l'intervalle d'amortissement,
- **en ce que** l'unité de commande d'émission et de traitement du signal de réception (18) présente un comparateur de niveau de signal (32) destiné à comparer le niveau du signal apparaissant à la sortie de mesure (16) du transducteur d'ultrasons (12) à une valeur seuil, et en ce que la première phase, dans laquelle la largeur de bande du filtre passe-bande (30) est réglée sur la première valeur de largeur de bande, plus grande, est interrompue lorsque le niveau du signal apparaissant à la sortie de mesure (16) du transducteur d'ultrasons (12) pendant l'intervalle d'amortissement est plus petit que la valeur seuil,
- **en ce qu'**au comparateur de niveau de signal (32) peut être transmis un signal de courbe enveloppe qui peut être généré à partir du signal apparaissant à la sortie de mesure (16) du transducteur d'ultrasons (12), et
- **en ce qu'**en amont du comparateur de niveau de signal (32) est connecté un filtre passe-bas (36) présentant une fréquence limite commutable qui est réglée, au moins pendant la première phase, dans laquelle la largeur de bande du filtre passe-bande (30) est réglée sur la première largeur de bande, plus grande, sur une première fréquence limite plus basse et, après l'expiration de la première phase et jusqu'à la fin de l'intervalle de réception qui fait suite à l'intervalle d'amortissement, sur une deuxième valeur de fréquence limite, plus élevée.
